# EUROPEAN PATENT SPECIFICATION

(11) **EP 3 184 875 B1**
(45) Date of publication and mention of the grant of the patent: **17.03.2021**
(21) Application number: 15202703.3
(22) Date of filing: 24.12.2015
(51) Int. Cl.: F17C 7/00

(54) **METHOD FOR CONTROLLING THE PRESSURE IN AN UNDERGROUND STORAGE VOLUME**
VERFAHREN ZUR STEUERUNG DES DRUCKS IN EINEM UNTERIRDISCHEN SPEICHERVOLUMEN
PROCÉDÉ POUR RÉGULER LA PRESSION DANS UN VOLUME DE STOCKAGE SOUTERRAIN

(43) Date of publication of application: 28.06.2017
(73) Proprietor: Air Liquide Oil and Gas Services Limited, Birmingham B46 1JY (GB)
(72) Inventor: Hill, Greg, Aberdeen AB15 6YW (GB)
(74) Representative: Keenway Patentanwälte Neumann Heine Taruttis

(56) References cited:
- WO-A1-2013/176878
- US-A1- 2014 241 802
- US-A1- 2015 321 849
- US-A1- 2015 323 116
- Joel D Nieland: "Salt Cavern Thermodynamics-Comparison Between Hydrogen, Natural Gas, and Air Storage", SOLUTION MINING RESEARCH INSTITUTE, 13 October 2008 (2008-10-13), pages 1-19, XP055372248, Galvestone, Texas Retrieved from the Internet: URL:www.solutionmining.org [retrieved on 2017-05-12]

## Description

This document deals with storing a compressible fluid like helium in an underground storage volume, e. g. underground caverns and a method for controlling the pressure in such an underground storage volume if incompressible fluid is introduced or withdrawn from such an underground storage volume.

The use of underground caverns for storing gases and liquids like e. g. natural gas or crude oil and its products is known. Such underground caverns are e. g. leached in salt formations or created by hard rock mining. Such underground caverns need a minimum pressure to maintain the structural integrity of the cavern and to prevent collapsing of the cavern. In known approaches this is ensured by a minimum volume of gas which remains in the cavern at all times. This minimum volume of gas is usually denoted as pad gas. In known approaches a maximum amount of fluid to be stored in such a cavern exists.

From US 2015/321849 A1 and from WO 2013/176878 A1 methods for storing fluids in underground storage volumes are known. Therein, lower and upper limits for the pressure are provided.

It is an object of the present invention to provide a method for controlling the pressure in an underground storage volume in which the disadvantages known from prior art are at least in part overcome.

This object is solved by the method of the independent claim. The dependent claims deal with advantageous embodiments of the invention.

According to the present invention a method for controlling the pressure in an underground storage volume is proposed wherein the underground storage volume is at least in part filled with an incompressible fluid, wherein the pressure within the underground storage volume is monitored, wherein a compressible fluid can be introduced into and extracted from the underground storage volume, wherein if the pressure within the underground storage volume reaches a predetermined upper pressure limit incompressible fluid is extracted from the underground storage volume for reducing the pressure in the storage volume; wherein if the pressure within the underground storage volume reaches a predetermined lower pressure limit incompressible fluid is introduced into the underground storage volume for increasing the pressure in the underground storage volume.

The underground storage volume is preferably an underground cavern, in particular a leached cavern in a salt formation. Such caverns are generally characterized by a maximum pressure and a minimum pressure. If the pressure in the cavern is above the maximum presser or below the minimum pressure the cavern itself can be damaged. The values of the maximum and the minimum pressure depend mainly on the geological circumstances of the cavern, e. g. the kind of stones and/or the structure of the cavern. To clearly avoid a structural damage to the cavern the upper pressure limit is selected to be slightly below the maximum pressure, in particular to be about 1 % below the maximum pressure and the lower pressure limit is selected to be slightly above the minimum pressure, in particular to be about 1 % above the minimum pressure to ensure to use as much storage as possible.

As an incompressible fluid it is preferred to use brine as this is easily available in particular in leached caverns in salt formations. As a compressible fluid it is possible to use hydrogen or helium, in particular preferred helium.

The method according to the present invention allows a pressure management in which the incompressible fluid is used to adjust the pressure differences which are generated by introducing or withdrawing the compressible fluid. By this it is possible to avoid the use of pad gas. Further, by the multi cycle process in which the compressible gas is introduced into underground storage volume until the upper pressure limit is reached whereas then the pressure in the underground storage volume is reduced by removal of a part of the incompressible fluid so that the pressure within the cavern is reduced. This allows to introduce compressible fluid again increasing the amount of compressible fluid which can be stored in the underground storage volume. According to independent claim 1, incompressible fluid is withdrawn from the underground storage volume until the pressure in the underground storage volume has reached the lower pressure limit. Then, again, an amount of compressible fluid is introduced into the underground storage volume, at most until the pressure in the underground storage volume has reached the upper pressure limit. By repeating this cycle the capacity of the underground storage volume to store the compressible fluid can be increased significantly.

Preferably, if it is not necessary to introduce compressible fluid into the underground storage volume the pressure in the underground storage volume is kept close to the upper pressure limit as this keeps a maximum of stored compressible fluid available. Usually, the compressible fluid is provided via a pipeline. Depending on the pressure in the underground storage it is, therefore, usually necessary to compress the compressible fluid to a higher pressure either when introducing the compressible fluid to the underground storage volume or when extracting the compressible fluid from the underground storage volume.

According to a preferred embodiment the introduction or extraction of the compressible fluid is terminated if while introducing compressible fluid the upper pressure limit is reached or if while extracting compressible fluid the lower pressure limit is reached.

This allows a safe use of the underground storage volume as it is possible to safely avoid to reach the maximum or minimum pressure which cannot be exceeded without structural damage to the underground storage volume.

In this context it is further preferred to terminate the introduction or extraction of the compressible fluid as long as at least one of the following conditions is fulfilled:
a) a predetermined delay since the beginning of the termination is elapsed; and
b) a predetermined pressure level has been reached.

This allows a certain reduction of the pressure in the underground storage volume if the introduction of compressible fluid has been terminated to let the pressure in the underground storage volume be reduced before it is again started to introduce compressible fluid into the underground storage volume. On the other hand this allows a certain increase of the pressure in the underground storage volume if the extraction of compressible fluid has been terminated to let the pressure in the underground storage volume be increased before it is again started to extract compressible fluid into the underground storage volume.

According to a further embodiment the incompressible fluid is delivered to a reservoir after extraction from the underground storage volume and is delivered from the reservoir to the underground storage volume for introduction into the underground storage volume.

The use of a reservoir allows a sustainable use of the underground storage volume. In particular, if brine is used as an incompressible fluid it is advantageous to provide a large brine reservoir close to the underground storage volume or the salt cavern allowing to use the brine instantly as the medium to increase the pressure in the underground storage volume.

According to a further improvement the compressible fluid is at least one of nitrogen, air, carbon dioxide, hydrogen, helium, and argon.

It is particularly preferred to use helium as the compressible fluid. With this invention it is easily possible to store helium with a high purity of e. g. more than 99 Vol.-% [Volume-%] in a salt cavern.

According to an improvement the compressible fluid is introduced to and extracted from the underground storage volume in the gaseous state

The introduction and extraction of gaseous compressible fluid reduces the requirements to the equipment used. In particular, standard pumps can be used to compress the compressible fluid.

According to a further improvement the incompressible fluid is at least one of brine, water and water slurry.

Brine, water and water slurry are incompressible fluids that are easily available. In particular, brine is preferred, preferably if a salt cavern is used as an underground storage volume. Brine is understood to be a solution of at least one salt, in particular comprising sodium chloride (NaCl) in water (H₂O). The term water slurry is understood as a fluid mixture of a pulverized solid with water. It is in particular advantageous to use a water based incompressible fluid in the method according to the invention as some compressible fluids like e. g. are only soluble in water to a certain, limited degree. Therefore, if such a compressible fluid is stored in an underground storage volume which contains a significant amount of a water based incompressible fluid there is only a very limited loss of the compressible fluid and the compressible fluid and the incompressible fluid stay mainly separated.

According to a further improvement the compressible fluid is dehumidified after extraction from the underground storage volume.

Usually, the stored compressible fluid like e. g. helium is intended for further use after extraction from the underground storage volume it is necessary to provide it clean. The intake of humidity is possible to a certain degree and dehumidification allows to reduces the moisture or humidity significantly.

In this context it is preferred that the dehumidification is performed by guiding the compressible fluid through a molecular sieve.

As a molecular sieve preferably silica is used. Alternatively, an alumosilicate or a zeolite is a preferred variant of a molecular sieve.

According to a further improvement hydrocarbons are removed from the compressible fluid.

When using underground storage volumes for the storage of compressible fluids frequently deposits from the primary use of the underground storage volumes e. g. from mining remain. This can be either remains of the substance that has been mined or remains of chemicals used for mining. In this context it is preferred to remove hydrocarbons from the compressible fluid.

In this context it is preferred that the compressible fluid is guided through a bed of activated carbon for the removal of hydrocarbons.

The use of activated carbon is a reliable and economical advantageous way of removing hydrocarbons from the compressible fluid.

According to a further improvement atmospheric contaminants such as but not limited to oxygen, nitrogen and/or carbon dioxide are removed from the compressible fluid by pressure swing adsorption.

In particular, if hydrogen or helium are used as the compressible fluids atmospheric contaminants having a higher boiling point than the compressible fluid can contaminate the compressible fluid. Pressure swing adsorption is an easily applicable method for removing said contaminants from the compressible fluid. According to a further embodiment the underground storage volume is an underground salt cavern.

Salt caverns have been found to provide storage volumes being tight even for the storage of gases with small molecules like hydrogen or helium as compressible fluids. Salt caverns are well accessible and usually directly provide a source for an incompressible fluid, namely brine.

According to independent claim 1, if compressible fluid has to be introduced into the underground storage volume the following steps are performed alternatingly as a multi-cycle process:
a) reducing the pressure in the underground storage volume by extracting incompressible fluid, preferably until the lower pressure limit is reached; and
b) introducing the compressible fluid, preferably until the upper pressure limit is reached.

According to a further improvement if compressible fluid has to be extracted from the underground storage volume the following steps are performed at least once:
α) extracting compressible fluid from the underground storage volume, preferably until the lower pressure limit is reached; and
β) introducing the incompressible fluid to increase the pressure in the underground storage volume, preferably until the upper pressure limit is reached.

It should be noted that the individual features specified in the claims may be combined with one another in any desired technological reasonable manner and form further embodiments of the invention, however, without departing from the subject-matter of independent claim 1. The specification, in particular in connection with the figures, explains the invention further and specifies particularly preferred embodiments of the invention. Particularly preferred embodiments of the invention and also the technical field will now be explained in more detail on the basis of the enclosed figures. It should be noted that the exemplary embodiments shown in the figures are not intended to restrict the invention The figures are schematic and may not be to scale. The figures display
- Fig. 1: a sample diagram of a pressure in an underground storage volume; and
- Fig. 2: an example of an equipment to perform the method for controlling the pressure in an underground storage volume.

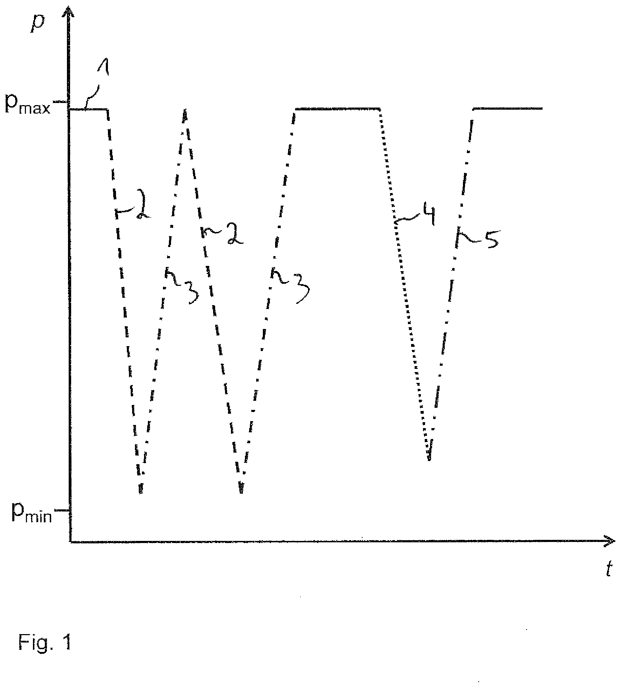

Fig. 1 displays the evolution of the pressure p in an underground storage volume against the time t. The underground storage volume is an underground salt cavern which has due to the geological properties a maximum pressure and a minimum pressure. It is filled both with an incompressible fluid, in this example brine, and a compressible fluid, in this example helium. It is used to store helium. Therefore, helium needs to be introduced and extracted from the underground storage volume frequently.

If the pressure p in the underground storage volume is above the maximum pressure or below the minimum pressure the structural integrity of the underground storage volume is endangered. Therefore, the pressure p in the underground storage volume is controlled to be within a predetermined pressure interval having a predetermined lower pressure limit pₘᵢₙ and a predetermined upper pressure limit pₘₐₓ which is well in between the maximum pressure and the minimum pressure. This ensures that the underground storage volume can be used without structural damage of the same.

Starting from a starting pressure 1 which is close to the upper pressure limit pₘₐₓ the need for storing more helium arises. If now in this situation helium would be introduced into the underground storage there would be the risk of structural damage to the underground storage volume. Therefore, first of all, the pressure in the underground storage volume is reduced by extracting brine 2 from the underground storage volume until a pressure equal to the lower pressure limit pₘᵢₙ. Then, helium is introduced in step 3 into the underground storage volume until a pressure equal to the upper pressure limit pₘₐₓ has been reached. Then, in another step of extracting brine 2 the pressure is again reduced until a pressure equal to the lower pressure limit pₘᵢₙ has been reached. In another step of introducing helium 3 into the underground storage volume another amount of helium is introduced into the underground storage volume. Now, for some time the pressure is kept constant in the underground storage volume until it is necessary to extract helium in a helium extraction step 4. Thereafter, to bring the pressure back to a pressure close to the upper pressure limit pₘₐₓ a step of introducing brine 5 to the underground storage volume is performed.

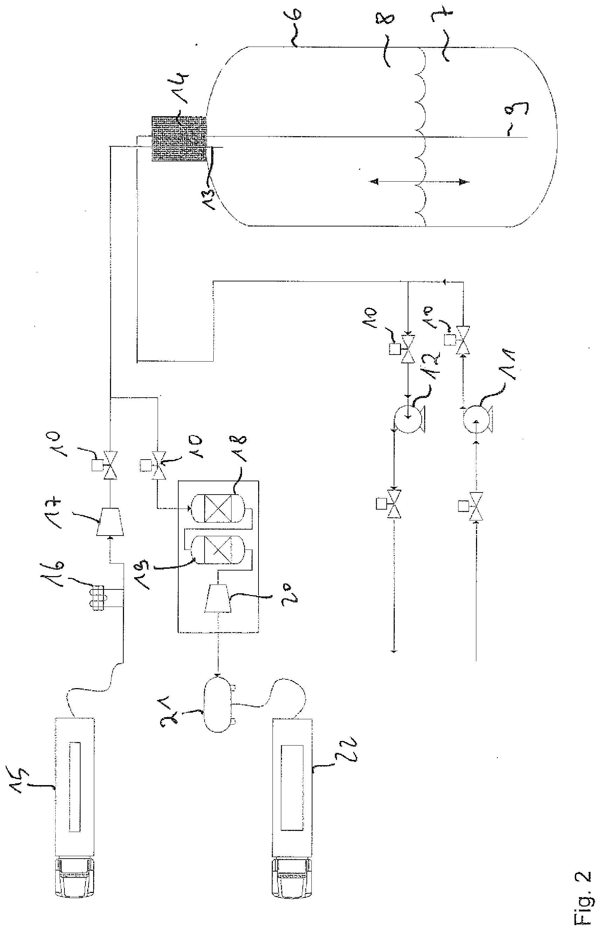

Fig. 2 displays schematically an equipment used to control the pressure in an underground storage volume 6 being a salt cavern. The underground storage volume 6 is filled partly with an incompressible fluid 7 namely brine and a compressible fluid 8 namely helium. The underground storage volume 6 is used to store the compressible fluid 8 which is to be extracted from the underground storage volume 6 in case of need and which has to be introduced into the underground storage volume 6 if it is needed to store the compressible fluid 8. If it is necessary to introduce incompressible fluid 7 into the underground storage volume 6 to increase the pressure within the underground storage volume 6 this is done in the base section of the underground storage volume 6 via a brine pipe 9 which is connected via valves 10 to a brine introduction pump 11. The brine introduction pump 11 convey brine as an incompressible fluid from a not shown reservoir through the brine pipe 9 into the bottom region of the underground storage volume 6. If incompressible fluid has to be extracted from the underground storage volume 6 this is done via the brine pipe 9 as well which is connected via a valve 10 to a brine extraction pump 12 to the reservoir. It is well noted that it is possible to combine the functions of the brine introduction pump 11 and the brine extraction pump 12 in one single pump.

Compressible fluid is introduced and extracted from the underground storage volume 6 via the helium pipe 13 which ends in the upper head section of the underground storage volume 6. Helium is lighter than brine, therefore, helium is collected in the head area of the underground storage volume 6 whereas brine is collected in the bottom area of the underground storage volume 6. The underground storage volume 6 is sealed via the seal 14 to avoid loss of helium.

In a first helium transporter 15 an amount of helium in the liquid state to be stored in the underground storage volume 6 is provided. This liquid helium is vaporized in a vaporizer 16 and is subsequently compressed in a compressor 17 to be provided via a valve 10 and the helium pipe to the head section of the underground storage volume 6. Instead of a first helium transporter 15 it is of course possible to convey the helium directly from a helium source to the underground storage volume 6.

In case of an extraction of helium from the underground storage volume 6 the helium is guided via the helium pipe 13 and a valve 10 to a unit 18 for dehumidifying the helium gas comprising a molecular sieve and, subsequently, to a unit 19 for the removal of hydrocarbons including a bed of activated carbon. Subsequently, the helium gas is provided to a liquefier 20 in which the helium gas is liquefied. The liquefied helium gas is provided to an intermediate helium storage 21 from which it can be filled to a second helium transporter 22. Instead of the second helium transporter 22 the helium can be directly provided to a point of use.

To control the pressure p within the underground storage volume 6 incompressible fluid - in this example brine - is introduced into the underground storage volume 6 to increase the pressure and is extracted from the underground storage volume 6 to decrease the pressure in the underground storage volume 6. By this the level of incompressible fluid is changing as is displayed by the arrow 23.

The method according to the present invention allows to increase the amount of compressible fluid like helium stored in an underground storage volume 6, e. g. a salt cavern, by adjusting the pressure by the introduction or extraction of an incompressible fluid like brine.

### Reference Numerals

- 1: starting pressure
- 2: extracting brine
- 3: introducing helium
- 4: extracting helium
- 5: introducing brine
- 6: underground storage volume
- 7: incompressible fluid
- 8: compressible fluid
- 9: brine pipe
- 10: valve
- 11: brine introduction pump
- 12: brine extraction pump
- 13: helium pipe
- 14: seal
- 15: first helium transporter
- 16: evaporator
- 17: compressor
- 18: unit for dehumidifying
- 19: unit for the removal of hydrocarbons
- 20: liquefier
- 21: intermediate helium storage
- 22: second helium transporter
- 23: change of level of incompressible fluid

- p: pressure
- Pmax: upper pressure limit
- Pmin: lower pressure limit
- t: time

## Claims

1. Method for controlling the pressure (p) in an underground storage volume (6),
wherein the underground storage volume (6) is at least in part filled with an incompressible fluid (7),
wherein the pressure within the underground storage volume (6) is monitored,
wherein a compressible fluid (8) can be introduced into and extracted from the underground storage volume (6),
wherein if the pressure (p) within the underground storage volume (6) reaches a predetermined upper pressure limit (pₘₐₓ) incompressible fluid (7) is extracted from the underground storage volume (6) for reducing the pressure (p) in the underground storage volume (6);
wherein if the pressure (p) within the underground storage volume (6) reaches a predetermined lower pressure (pₘᵢₙ) limit incompressible fluid (7) is introduced into the underground storage volume (6) for increasing the pressure (p) in the underground storage volume (6)
**characterized in that** if compressible fluid (8) has to be introduced into the underground storage volume (6) the following steps are performed alternatingly as a multi-cycle process:
a) reducing the pressure (p) in the underground storage volume (6) by extracting incompressible fluid (7) until the lower pressure limit (Pmin) is reached; and
b) introducing the compressible fluid (8) until the upper pressure limit (Pmax) is reached.

2. Method according to claim 1, wherein the introduction or extraction of the compressible fluid (8) is terminated if while introducing compressible fluid (8) the upper pressure limit (pₘₐₓ) is reached or if while extracting compressible fluid (8) the lower pressure limit (pₘᵢₙ) is reached.

3. Method according to claim 2, wherein the introduction or extraction of the compressible fluid (8) is terminated as long as at least one of the following conditions is fulfilled:
a) a predetermined delay since the beginning of the termination is elapsed; and
b) a predetermined pressure level has been reached.

4. Method according to one of the preceding claims, wherein the incompressible fluid (7) is delivered to a reservoir after extraction from the underground storage volume (6) and is delivered from the reservoir to the underground storage volume (6) for introduction into the underground storage volume (6).

5. Method according to one of the preceding claims, wherein the compressible fluid (8) is at least one of nitrogen, air, carbon dioxide, hydrogen, helium, and argon.

6. Method according to claim 5, wherein the compressible fluid (8) is introduced to and extracted from the underground storage volume (6) in the gaseous state.

7. Method according to one of the preceding claims, wherein the incompressible fluid (7) is at least one of brine, water and water slurry.

8. Method according to one of the preceding claims, wherein the compressible fluid (8) is dehumidified after extraction from the underground storage volume (6).

9. Method according to claim 8, wherein the dehumidification is performed by guiding the compressible fluid through a molecular sieve.

10. Method according to one of the preceding claims, wherein hydrocarbons are removed from the compressible fluid.

11. Method according to claim 10, wherein the compressible fluid is guided through a bed of activated carbon for the removal of hydrocarbons.

12. Method according to one of the preceding claims, wherein atmospheric contaminants such as oxygen (O₂), nitrogen (N₂), carbon hydroxide (CO₂) are removed from the compressible fluid by pressure swing adsorption.

13. Method according to one of the preceding claims, wherein the underground storage volume (6) is an underground salt cavern.

14. Method according to one of the preceding claims, wherein if compressible fluid (8) has to be extracted from the underground storage volume (6) the following steps are performed at least once:
α) extracting compressible fluid (8) from the underground storage volume (6), preferably until the lower pressure limit (pₘᵢₙ) is reached; and
β) introducing the incompressible fluid (7) to increase the pressure (p) in the underground storage volume (6), preferably until the upper pressure limit (pₘₐₓ) is reached.

## Patentansprüche

1. Verfahren zum Steuern des Drucks (p) in einem unterirdischen Speichervolumen (6), wobei das unterirdische Speichervolumen (6) wenigstens teilweise mit einem inkompressiblen Fluid (7) gefüllt ist, wobei der Druck innerhalb des unterirdischen Speichervolumens (6) überwacht wird, wobei ein kompressibles Fluid (8) in das unterirdische Speichervolumen (6) eingeleitet und daraus entnommen werden kann, wobei, wenn der Druck (p) innerhalb des unterirdischen Speichervolumens (6) eine zuvor bestimmte obere Druckgrenze (pₘₐₓ) erreicht, das inkompressible Fluid (7) aus dem unterirdischen Speichervolumen (6) zum Verringern des Drucks (p) in dem unterirdischen Speichervolumen (6) entnommen wird;
wobei, wenn der Druck (p) innerhalb des unterirdischen Speichervolumens (6) eine zuvor bestimmte untere Druckgrenze (pₘᵢₙ) erreicht, das inkompressible Fluid (7) in das unterirdische Speichervolumen (6) zum Erhöhen des Drucks (p) in das unterirdische Speichervolumen (6) eingeleitet wird, **dadurch gekennzeichnet, dass**, wenn das kompressible Fluid (8) in das unterirdische Speichervolumen (6) eingeleitet werden muss, die folgenden Schritte abwechselnd als ein Vorgang mit mehreren Zyklen ausgeführt werden:
a) Reduzieren des Drucks (p) in dem unterirdischen Speichervolumen (6) durch Entnehmen des inkompressiblen Fluids (7), bis die untere Druckgrenze (pₘᵢₙ) erreicht ist; und
b) Einleiten des kompressiblen Fluids (8), bis die obere Druckgrenze (pₘₐₓ) erreicht ist.

2. Verfahren nach Anspruch 1, wobei das Einleiten oder das Entnehmen des kompressiblen Fluids (8) beendet wird, wenn während des Einleitens des kompressiblen Fluids (8) die obere Druckgrenze (pₘₐₓ) erreicht wird oder wenn während des Entnehmens des kompressiblen Fluids (8) die untere Druckgrenze (pₘᵢₙ) erreicht wird.

3. Verfahren nach Anspruch 2, wobei das Einleiten oder das Entnehmen des kompressiblen Fluids (8) beendet wird, solange wenigstens eine der folgenden Bedingungen erfüllt ist:
a) eine zuvor bestimmte Verzögerung seit dem Beginn der Beendigung verstrichen ist; und
b) ein zuvor bestimmter Druckpegel erreicht wurde.

4. Verfahren nach einem der vorhergehenden Ansprüche, wobei das inkompressible Fluid (7) nach der Entnahme aus dem unterirdischen Speichervolumen (6) zu einem Sammelbecken gefördert wird und von dem Sammelbecken zu dem unterirdischen Speichervolumen (6) zum Einleiten in das unterirdische Speichervolumen (6) gefördert wird.

5. Verfahren nach einem der vorhergehenden Ansprüche, wobei das kompressible Fluid (8) mindestens eines der folgenden Gase:Stickstoff, Luft, Kohlendioxid, Wasserstoff, Helium und Argon umfasst.

6. Verfahren nach Anspruch 5, wobei das kompressible Fluid (8) in dem gasförmigen Zustand bei dem unterirdischen Speichervolumen (6) eingeleitet und daraus entnommen wird.

7. Verfahren nach einem der vorhergehenden Ansprüche, wobei das inkompressible Fluid (7) mindestens eines der folgenden Fluide: Salzlösung, Wasser und wässriger Aufschlämmung umfasst.

8. Verfahren nach einem der vorhergehenden Ansprüche, wobei das kompressible Fluid (8) nach der Entnahme aus dem unterirdischen Speichervolumen (6) entfeuchtet wird.

9. Verfahren nach Anspruch 8, wobei die Entfeuchtung durch Führen des kompressiblen Fluids durch ein Molekularsieb ausgeführt wird.

10. Verfahren nach einem der vorhergehenden Ansprüche, wobei Kohlenwasserstoffe aus dem kompressiblen Fluid entfernt werden.

11. Verfahren nach Anspruch 10, wobei das kompressible Fluid für die Entfernung von Kohlenwasserstoffen durch ein Aktivkohlebett geführt wird.

12. Verfahren nach einem der vorhergehenden Ansprüche, wobei atmosphärische Verunreinigungen, wie etwa Sauerstoff (O₂), Stickstoff (N₂), Kohlenstoffhydroxid (CO₂), durch Druckwechseladsorption aus dem kompressiblen Fluid entfernt werden.

13. Verfahren nach einem der vorhergehenden Ansprüche, wobei das unterirdische Speichervolumen (6) eine unterirdische Salzkaverne ist.

14. Verfahren nach einem der vorhergehenden Ansprüche, wobei, wenn kompressibles Fluid (8) aus dem unterirdischen Speichervolumen (6) entnommen werden muss, die folgenden Schritte wenigstens einmal ausgeführt werden:
a) Entnehmen von kompressiblem Fluid (8) aus dem unterirdischen Speichervolumen (6), vorzugsweise bis die untere Druckgrenze (pₘᵢₙ) erreicht ist; und
β) Einleiten des inkompressiblen Fluids (7), um den Druck (p) in dem unterirdischen Speichervolumen (6) zu erhöhen, vorzugsweise bis die obere Druckgrenze (pₘₐₓ) erreicht ist.

## Revendications

1. Procédé destiné à réguler la pression (p) dans un volume de stockage souterrain (6), dans lequel le volume de stockage souterrain (6) est au moins en partie rempli d'un fluide incompressible (7), dans lequel la pression à l'intérieur du volume de stockage souterrain (6) est surveillée, dans lequel un fluide compressible (8) peut être introduit à l'intérieur et extrait du volume de stockage souterrain (6), dans lequel si la pression (p) à l'intérieur du volume de stockage souterrain (6) atteint une limite de pression supérieure prédéterminée (pₘₐₓ), un fluide incompressible (7) est extrait du volume de stockage souterrain (6) pour réduire la pression (p) dans le volume de stockage souterrain (6) ;
dans lequel si la pression (p) à l'intérieur du volume de stockage souterrain (6) atteint une limite de pression inférieure prédéterminée (pₘᵢₙ), du fluide incompressible (7) est introduit dans le volume de stockage souterrain (6) pour augmenter la pression (p) à l'intérieur du volume de stockage souterrain (6)
**caractérisé en ce que**
si du fluide compressible (8) doit être introduit dans le volume de stockage souterrain (6), les étapes suivantes sont exécutées en alternance en tant que processus à cycles multiples :
a) la réduction de la pression (p) à l'intérieur du volume de stockage souterrain (6) en extrayant du fluide incompressible (7) jusqu'à ce que la limite de pression inférieure (pₘᵢₙ) soit atteinte ; et
b) l'introduction du fluide compressible (8) jusqu'à ce que la limite de pression supérieure (pₘₐₓ) soit atteinte.

2. Procédé selon la revendication 1, dans lequel l'introduction ou l'extraction du fluide compressible (8) est terminée si lors de l'introduction du fluide compressible (8) la limite de pression supérieure (pₘₐₓ) est atteinte ou si lors de l'extraction du fluide compressible (8) la limite de pression inférieure (pₘᵢₙ) est atteinte.

3. Procédé selon la revendication 2, dans lequel l'introduction ou l'extraction du fluide compressible (8) est terminée tant qu'au moins une des conditions suivantes est remplie :
a) un délai prédéterminé depuis le début de la terminaison s'est écoulé ; et
b) un niveau de pression prédéterminé a été atteint.

4. Procédé selon l'une des revendications précédentes, dans lequel le fluide incompressible (7) est distribué à un réservoir après extraction du volume de stockage souterrain (6) et est distribué du réservoir au volume de stockage souterrain (6) pour être introduit dans le volume de stockage souterrain (6).

5. Procédé selon l'une des revendications précédentes, dans lequel le fluide compressible (8) est de l'azote et/ou de l'air et/ou du dioxyde de carbone et/ou de l'hydrogène et/ou de l'hélium et/ou de l'argon.

6. Procédé selon la revendication 5, dans lequel le fluide compressible (8) est introduit et extrait du volume de stockage souterrain (6) à l'état gazeux.

7. Procédé selon l'une des revendications précédentes, dans lequel le fluide incompressible (7) est de la saumure et/ou de l'eau et/ou une suspension aqueuse.

8. Procédé selon l'une des revendications précédentes, dans lequel le fluide compressible (8) est déshumidifié après extraction du volume de stockage souterrain (6).

9. Procédé selon la revendication 8, dans lequel la déshumidification est effectuée en guidant le fluide compressible à travers un tamis moléculaire.

10. Procédé selon l'une des revendications précédentes, dans lequel les hydrocarbures sont éliminés du fluide compressible.

11. Procédé selon la revendication 10, dans lequel le fluide compressible est guidé à travers un lit de charbon actif pour l'élimination des hydrocarbures.

12. Procédé selon l'une des revendications précédentes, dans lequel les contaminants atmosphériques, tels que l'oxygène (O₂), l'azote (N₂) et l'hydroxyde de carbone (CO₂), sont éliminés du fluide compressible par adsorption à pression modulée.

13. Procédé selon l'une des revendications précédentes, dans lequel le volume de stockage souterrain (6) est une caverne de sel souterraine.

14. Procédé selon l'une des revendications précédentes, dans lequel si un fluide compressible (8) doit être extrait du volume de stockage souterrain (6), les étapes suivantes sont effectuées au moins une fois :
a) l'extraction du fluide compressible (8) du volume de stockage souterrain (6), de préférence jusqu'à ce que la limite de pression inférieure (pₘᵢₙ) soit atteinte ; et
β) l'introduction du fluide incompressible (7) pour augmenter la pression (p) dans le volume de stockage souterrain (6), de préférence jusqu'à ce que la limite de pression supérieure (pₘₐₓ) soit atteinte.
